# EUROPEAN PATENT SPECIFICATION

(11) **EP 2 149 424 B1**
(45) Date of publication and mention of the grant of the patent: **20.06.2012**
(21) Application number: 09251908.1
(22) Date of filing: 30.07.2009
(51) Int. Cl.: B23Q 17/20, B23Q 17/24

(54) **Combined machining and inspection process in machining of fan case rub strips**
Kombiniertes Bearbeitungs- und Prüfverfahren bei der Bearbeitung von Reibungsstreifen eines Gebläsegehäuses
Usinage et procédé d'inspection combinés pour l'usinage de bandes de frottement de carter de ventilateur

(30) Priority: 30.07.2008 US 182555
(43) Date of publication of application: 03.02.2010
(73) Proprietor: United Technologies Corporation, Hartford, CT 06101 (US)
(72) Inventor: Lilly, Douglas O., Jackson, MI 49201 (US)
(74) Representative: Tomlinson, Kerry John

(56) References cited:
- EP-A1- 0 359 660
- FR-A1- 2 766 114

## Description

### BACKGROUND

The present invention generally relates to fan containment assemblies for turbomachinery, such as gas turbine engines. More particularly, this invention relates to an automated method for removing an abradable material for a fan containment assembly, such as a fan nacelle rub strip.

Gas turbine engines generally operate on the principle of compressing air within a compressor section of the engine, and then delivering the compressed air to the combustion section of the engine where fuel is added to the air and ignited. Afterwards, the resulting combustion mixture is delivered to the turbine section of the engine, where a portion of the energy generated by the combustion process is extracted by a turbine to drive the engine compressor. High bypass turbofan engines, widely used for high performance aircraft which operate at subsonic speeds, have a large fan placed at the front of the engine to produce a majority of thrust.

The rotary fan is circumscribed by a stationary fan containment case such that the case is immediately adjacent the tips of the fan blades. The containment case serves to channel incoming air through the fan so as to ensure that the bulk of the air entering the engine will be compressed by the fan. However, a small portion of the air is able to bypass the fan blades through a radial gap present between the fan blade tips and the containment case. Because the air compressed by the fan blades is used to generate thrust, engine efficiency can be increased by limiting the amount of air which is able to bypass the fan blades by traveling around the fan blade tips through this gap. Accordingly, the fan and containment case are manufactured to close tolerances in order to minimize the gap. However, manufacturing tolerances, differing rates of thermal expansion and dynamic effects limit the extent to which this gap can be reduced. Furthermore, during the normal operation of an aircraft turbofan engine, the fan blades may rub the containment case as a result of a hard landing or a hard maneuver of the aircraft. Any rubbing contact between the fan blade tips and the containment case will abrade the tips of the rotors, tending to further increase the gap between the containment case and blade tips, thereby reducing engine efficiency.

In view of the above, it is well known in the art to cover the portion of the containment case adjacent the blade tips with an abradable material, such that the abradable material will sacrificially abrade away when rubbed by the fan blades. Various materials and processes have been suggested to form the abradable surface. A common technique for removing the abradable material is performed with handheld tools, such as an air chisel, after which sandpaper is used to achieve a smooth surface finish. While suitable for use on steel fan cases, air chisels are too aggressive for use on engines with aluminum cases. Any damage that may occur to the base metal must be repaired. After removal of the abradable material, the case must be inspected. This requires a different set of tools, and is a time consuming process. Due to the special equipment required to perform the machining operation and inspection operation, a limited number of facilities are available for removing fan case abradable material. As a result, additional costs, scheduling and transport problems are common.

Accordingly, it would be desirable if an improved technique were available by which the abradable material of a fan containment case could be removed and inspected within a single process and machine.

### SUMMARY

FR 2766114 A1 describes a method and apparatus for sharpening a saw blade.

Viewed from one aspect, the present invention provides a method of removing material from a workpiece, the method comprising: securing the workpiece to a rotatable spindle with locking mechanisms mounted to a machining station; recording an image of the workpiece with an image capturing device mounted to the machining station; comparing the recorded image to a database to select the appropriate program for the workpiece; and initiating a material removal process on the workpiece with a cutting tool attached to a first positionable arm mounted to the machining station; characterised by inspecting the surface of the workpiece where material has been removed using an inspection probe, attached to a second positionable arm mounted to the machining station, with a control system capable of automatically positioning the first and second arms.

Viewed from another aspect the present invention provides a machine for removing material from a workpiece, the machine comprising: a rotatable spindle with locking mechanisms for securing the workpiece; an image recording device for taking an image of the workpiece secured to the spindle; and a cutting tool attached to a first positionable arm, the cutting tool being capable of removing material from the workpiece being turned on the rotatable spindle; characterised by an inspection probe attached to a second positionable arm, the inspection probe being capable of taking readings of surfaces of the workpiece; a control system with a user interface, the control system being capable of automatically positioning the first and second positionable arms, and receiving inputs from the user interface; wherein the control system receives an image from the image recording device, compares the image to a database of preloaded images of potential workpieces, selects the appropriate programs based on a comparison of the image to the preloaded images, and displays the list of appropriate programs on the user interface.

### BRIEF DESCRIPTION OF THE DRAWINGS

FIG. 1 is a cross-sectional view of a gas turbine engine.

FIG. 2 is a partial perspective view of a material removal work station.

FIG. 3 is a perspective view of a fixture for the material removal work station of FIG. 2.

FIG. 4 is a partial perspective view of a material removal head of the material removal work station of FIG. 2.

FIG. 5 is a partial perspective view of an inspection head of the material removal work station of FIG. 2.

### DETAILED DESCRIPTION

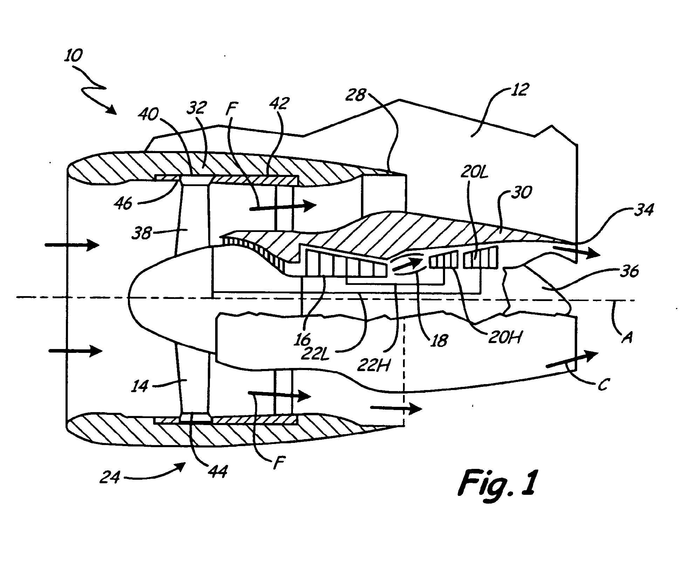

FIG. 1 illustrates a general partial fragmentary view of gas turbofan engine 10 suspended from engine pylon 12 as typical of an aircraft designed for subsonic operation. Engine 10 as illustrated is a high-bypass turbofan aircraft engine, which typically includes in serial flow communication with low pressure compressor driven fan assembly 14, high pressure compressor 16, annular combustor 18, high pressure turbine 20H, and low pressure turbine 20L. During operation, air is pressurized in high pressure compressor 16 and mixed with fuel in combustor 18 for generating hot combustion gases which flow through high and low pressure turbines 20H, 20L that extract energy therefrom. High pressure turbine 20H powers the high pressure compressor through HPT/HPC shaft assembly 22H, and the low pressure turbine 20L powers low pressure compressor fan assembly 14 through LPT/Fan rotor shaft assembly 22L. It should be understood that shaft assembly 22 may include various shafts, such as 22H and 22L, which coaxially rotate in a common or counter rotations arrangement.

The exemplary turbofan engine 10 is in the form of a high bypass ratio engine mounted within nacelle assembly 24 in which most of the air pressurized by fan assembly 14 bypasses the core engine itself for generating propulsion thrust. Fan air F is discharged from engine 10 through fan nozzle section 28 defined radially between core nacelle 30 and fan nacelle 32. Core exhaust gases C are discharged from the core engine through core exhaust nozzle 34 defined between core nacelle 30 and center plug 36 disposed coaxially therein around engine longitudinal centerline axis A of engine 10 and nacelle assembly 24.

Fan assembly 14 includes a plurality of circumferentially spaced fan blades 38 which may be made of a high-strength, low weight material such as a titanium alloy. Annular blade containment structure 40 is typically disposed within fan case 42 immediately surrounding the path of blades 38 to receive blade fragments which may be accidentally released, and thus retaining the fragments without permitting fragments to become free projectiles exterior to turbofan engine 10.

A rub strip 46 is located within annular containment structure 40 against which blade tips 44 of fan blades 38 are closely fitted to provide a sealing area for reducing the amount of air leaking past blade tips 44. Rub strip 46 is manufactured of a material which may be in intermittent contact with blade tips 44 of blades 38 during operation. Rub strip is manufactured of a material which may be smoothly worn away by fan blade tips 44 so that as tight a tip seal as possible is obtained.

Turbofan engine 10 includes high-volume fan 14 at its forward end for forcing ambient air into the core flow passage entering an axial compressor 16, combustor 18, and turbines 20H, 20L, and the fan flow passage which bypasses the core flow passage and provides direct thrust. Fan 14 is at the forward section of the engine and is the rotating element most at risk of damage in impact with foreign objects. Damage of fan 14 may, in an extreme case, dislodge a fragment of fan 14. Restoration of the abradable material of rub strip 46 may become necessary if damage has occurred from impacts with foreign objects.

In order to contain such fragments, blade fragment containment structures 40 typically include an annular band of a high strength material which surrounds tips 44 of the fan blades 38 for intercepting such fragments before they can pass out of the engine. Blade fragment containment structure 40 includes rub strip 46 against which fan blade tips 44 are closely fitted to provide a seal area which minimizes air leakage over fan blade tips 44.

During initial assembly and testing of turbofan engine 10 the interface between rub strip 46 and fan blade tips 44 may not be properly configured. Furthermore, during testing and operation, rub strip 46 may become unevenly worn resulting in an eccentricity which may result in improper test results or improper engine efficiency. In either situation, the core engine must be disassembled from fan assembly 14 and nacelle assembly 24 such that rub strip 46 may be replaced or machined to refine the interface or correct the eccentricity thereof. Such disassembly and reassembly may require significant time and increase the expense and complexity of engine development.

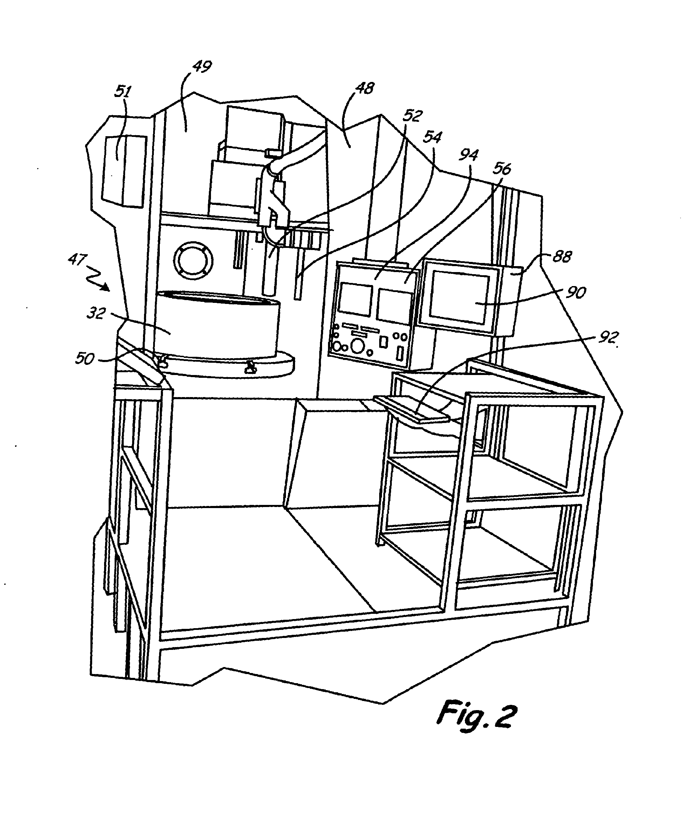

FIG. 2 is a perspective view of machining station 47 utilized to inspect and remove material of rub strip 46 in nacelle 32 of gas turbine engine 10. Machining station 47 contains enclosure 48 with doorway 49 for access into enclosure 48. Optionally, doorway 49 may contain a door for sealing enclosure 48 to prevent debris from material removal operations from contacting the surrounding work area and/or the operator of the machining station 47. In one embodiment, the machining station is an Okuma & Howa V80 vertical CNC lathe fitted with a Fanuc 18iTB control. Machining station 47 also contains fixture 50, image capture device 51, material removal head 52, inspection probe 54, and control system 56.

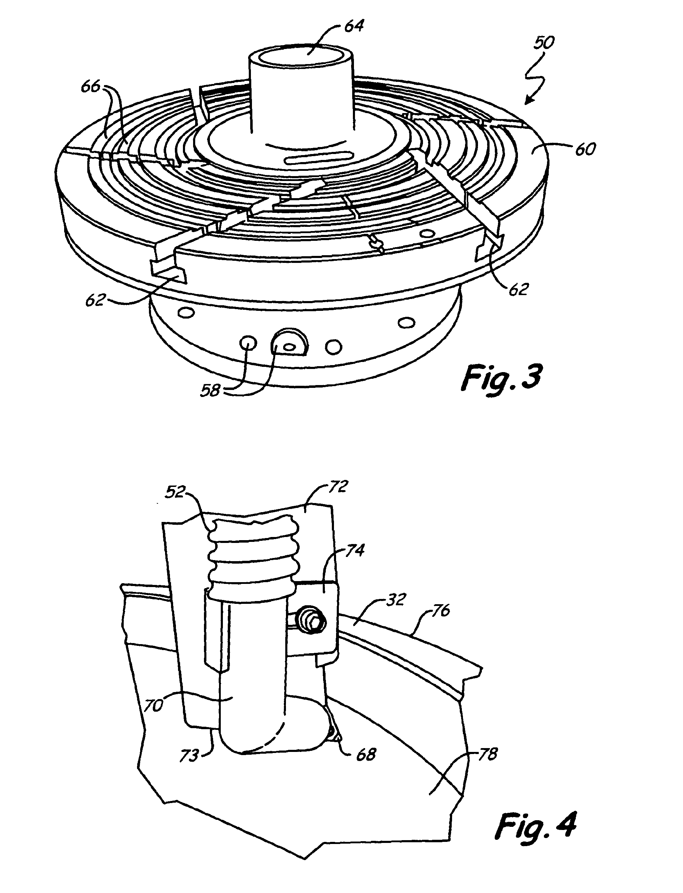

FIG. 3 is a perspective view of fixture 50. Fixture 50 is a rotatable spindle and is positioned and secured on the lower side of enclosure 48 through fasteners 58. Fixture 50 contains a round disk 60 with radial slots 62 for adjustable locking mechanisms to secure a workpiece such as nacelle 32 in place within enclosure 48. Locking mechanisms are designed to be adjustable within slots 62, allowing for the placement of various sized parts into fixture, including nacelles that are non-concentric about the engine axis. Center 64 of disk 60 of fixture 50 acts as a central reference point, such as 0, 0, 0 for an x, y, z Cartesian coordinate system. Disk 60 contains a series of axial grooves 66 surrounding the center 64 that also help accommodate and secure various sizes of engine nacelles to be repaired within enclosure 48 of machining station 47. During operation of machining station 47, disk 60 will spin about an axis centered on center 64, thus turning and spinning a nacelle held thereon.

FIG. 4 is a perspective view of material removal head 52 shown positioned on the interior of nacelle 32. Material removal head 52 has cutting tool 68 attached to tool mount 70. Cutting tool 68 is a replaceable cutting tip capable of material removal, and is common within the art. Tool mount 70 is secured to robotic arm 72 through attachment means 74, which as illustrated is a bracket and threaded fastener. Robotic arm 72 controls the position of material removal head 52 with respect to nacelle 32 and rub strip 46, including the depth of cut allowed to be made by cutting tool 68 into rub strip 46, as well as the vertical or linear position of the tool with respect to forward edge 76 of nacelle 32. Robotic arm 72 will position material removal head 52 so that cutting tool 68 only engages and removes abradable material 78 of rub strip 46 from nacelle 32. Robotic arm 72 may also carry debris clearing system 73. Debris clearing system 73 may be fluid actuated, such as a liquid wash that also acts as a coolant, or gaseous, such as compressed air or a vacuum drawn adjacent the cutting tool 68 to contain the debris removed in a controlled fashion.

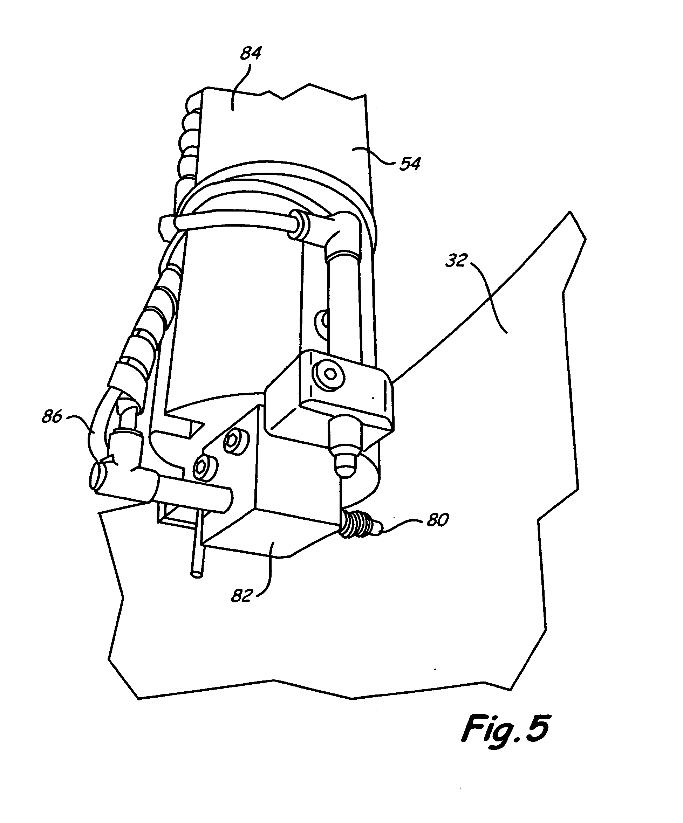

FIG. 5 is a perspective view of inspection probe 54 of the material removal work station 47 of FIG. 2. Inspection probe 54 contains gauge probe head 80 that contacts the inner surface of nacelle 32, including rub strip 46. Probe head 80 is a relatively small diameter bulb that can be replaced. Probe head 80 is secured by mounting mechanism 82 to the end of robotic arm 84. Robotic arm 84 controls the position of the probe head 80 with respect to nacelle 32. Once probe head 80 on probe arm 84 makes contact with nacelle 32, a signal is sent to control system 56 (see FIG. 2) through connection wires 86. Control system 56 will then stop the movement of robotic arm 84 in the current path, reposition the probe and start a new path until contact is again made with rub strip 46 of nacelle 32, and repeat until an adequate amount of readings are taken to verify a map or grid of the surface being probed. In an alternative embodiment, robotic arm 84 drags probe head 80 in a continuous path along the surface of nacelle 32, while signals are sent of the position of probe head 80 at regular intervals to control system 56 to obtain the map of the surface being measured. In one embodiment, probe head 80 is fitted using independent Sony magnescale gauge probes with linear feedback scales for the "X" and "Z" axis. The inspection system with inspection probe 54 is independent of material removal head 52.

Referring again to FIG. 2, control system 56 contains a user interface 88 having operator display in the form of touch screen 90, keyboard 92, and interface panel 94. Control system 56 contains a computer with associated programs stored thereon. User interface 88 displays these programs and allows for input of system data or selections by an operator of machining station 47. Interface panel 94 contains a series of lights and buttons that act as inputs or warning outputs should any problems arise with machining station 47. Control system 56 determines the position of robotic arms 72 and 84, and the position of fixture 50. In one embodiment, robotic arms 72 and 84 are six axis automated appendages controlled by control system 56, thus resulting in motion throughout an entire Cartesian three-dimensional coordinates centered with 0, 0, 0 located at center 64 of fixture 50.

The above described machining station 47 can be utilized in the production of turbofan engine cases. Nacelle 32 is manufactured to specifications, and rub strip 46 is attached thereto. Rub strip 46 is designed to be oversized, and then machined to specifications. The machining is typically one of the last steps in manufacturing nacelle 32.

A pre-manufactured nacelle 32 with rub strip 46 is provided for final machining and inspection. First, gauge probe 80 is calibrated to a certified measurement standard, such as center 64 of fixture 50. In one embodiment, multiple probes are fixed in both vertical and horizontal directions. The measuring of a standard verifies both the probes are measuring correctly and that the measurement location agrees with the machine tool hardware location. The calibration cycle repeats with each workpiece, such as a fan case assembly, processed.

Multiple fan case designs are configured to be manufacture on machining station 47. To assure proper operation of machining station 47, image capture device 51 is utilized. Image capture device 51 uses a DVT digital camera system combined with a laser to identify which component design type is fixed to the machine and the identified design's configuration is opened in control system 56 for execution. The DVT digital camera system takes a picture of the workpiece fixed to the machine and compares the picture to a database of approved pictures in control system 56 to find a match. When a match is found, the machine logic allows the operator to select the revision level of that specific workpiece, such as an engine fan case type. If a match is not found, the logic is mistake proof and will not proceed. It is not possible for the machine operator to execute a wrong program for a specific component design type. When the component design type is identified, the operator selects the specific operation via user interface 88, such as with touch screen 90 or through the use of keyboard 92.

After identification of the proper program for the workpiece, the material is roughed with preset depth of cut values. For a turbofan engine case, the preinstalled fan case rubstrip made of abradable material is machined. The cut may be accompanied by automatic vacuum for dust removal or similar debris clearing system 73. Similarly, the rough machined surface is vacuum brushed upon completion of the cut to further clean the surface in preparation for the rough inspection.

Next, inspection probe 54 measures design specified control points on the surface of the workpiece that is being machined. Maximum and minimum finish depth of cut values are calculated by the computer of control system 56. If the difference between maximum and minimum values is too large, the process is ended and the operator notified through a display on user interface 90. The minimum depth of cut value is used by the inspection interface received from inspection probe 54, and input into the machining interface to be used as a finish cut value. The finish cut value obtained from the inspection interface is used to machine a final cut on the workpiece. The cut may again be accompanied by automatic vacuum for dust removal.

Inspection probe 54 then again measures design specified control points on the surface. Actual deviations are recorded to a data network along with the identification of the workpiece, such as a serial number and date. Initial setup location accuracy is also recorded. In one embodiment, a special design is used to automate off-center turning operations required for some workpiece applications. The rotating spindle of fixture 50 automatically moves off center for machining and back to center at completion. The location of fixture 50 is verified before, during and after eccentric operations.

Requiring the inspection and machining hardware to be integral to the same machining station 47, but with independent control of each, offers advantages over the prior art. A common workpiece constraint is utilized for both machining and inspection. Machining and inspection accuracy is monitored by separate hardware scales. This facilitates real time interchange and logical use of data between inspection and machining interfaces during the process. This eliminates the need for moving of the workpiece between different inspection and machining equipment. Another result realized from the common design was the benefit of an automated finish cut "depth of pass" calculation. The process therefore uses an inprocess inspection without any interruption to the manufacturing process. Further, the initial image capture comparison to a database automates the appropriate program selection. This eliminates operator error during the repair process. With the current combination inspection and machining station as described here, rub strip 46 is machined to preset tolerances, thus minimizing defects, including eccentricity of the fan case.

Although the present invention has been described with reference to preferred embodiments, workers skilled in the art will recognize that changes may be made in form and detail without departing from the scope of the invention, which is defined by the claims.

## Claims

1. A method of removing material from a workpiece (42), the method comprising:
securing the workpiece (42) to a rotatable spindle (50) with locking mechanisms mounted to a machining station (47);
recording an image of the workpiece (42) with an image capturing device (51) mounted to the machining station (47);
comparing the recorded image to a database to select the appropriate program for the workpiece (42); and
initiating a material removal process on the workpiece (42) with a cutting tool (68) attached to a first positionable arm (72) mounted to the machining station (47);
**characterised by**
inspecting the surface of the workpiece (42) where material has been removed using an inspection probe (54), attached to a second positionable arm (84) mounted to the machining station (47), with a control system (56) capable of automatically positioning the first and second arms (72, 84).

2. The method of claim 1 further comprising:
calculating a final material removal process specification based on the inspection; and
removing additional material from the workpiece (42) based on the calculation.

3. The method of claim 2 further comprising:
performing a final inspection to assure the part meets specifications calculated.

4. The method of claim 1, 2 or 3 wherein the workpiece (42) is non-concentric in cross-sectional area.

5. The method of claim 4 further comprising:
moving the rotatable spindle (50) off center to accommodate the non-concentric workpiece (42).

6. The method of claim 5 further comprising:
moving the rotatable spindle (50) back to center after the material removal process; and
verifying the spindle location after moving the rotatable spindle (50) back to center.

7. A method as claimed in any preceding claim comprising:
positioning a cutting tool (68) with respect to the rotatable spindle (50) in response to the program selected.

8. The method of any preceding claim further comprising:
clearing the area of material removal with a debris clearing system (73).

9. The method of any preceding claim further comprising:
providing a list of programs available for the workpiece (42) to a display available to an operator, and
allowing the operator to select a desired program from the list of programs.

10. A method of machining a turbofan engine case (42) comprising the steps of any preceding claim, wherein the material removal process removes material from an abradable rub strip (46) of the engine case.

11. A machine for removing material from a workpiece (42) the machine comprising:
a rotatable spindle (50) with locking mechanisms for securing the workpiece (42);
an image recording device (51) for taking an image of the workpiece (42) secured to the spindle; and
a cutting tool (68) attached to a first positionable arm (72), the cutting tool (68) being capable of removing material from a workpiece (42) being turned on the rotatable spindle (50);
**characterised by**
an inspection probe (54) attached to a second positionable arm (84), the inspection probe (54) being capable of taking readings of surfaces of the workpiece (42);
a control system (56) with a user interface (88), the control system being capable of automatically positioning the first and second positionable arms (72, 84) and receiving inputs from the user interface;
wherein the control system is adapted to receive an image from the image recording device (51), to compare the image to a database of preloaded images of potential workpieces, to select the appropriate programs based on a comparison of the image to the preloaded images, and to display the list of appropriate programs on the user interface.

12. The machine of claim 11 further comprising:
a debris clearing system (73) adjacent the cutting tool (68).

13. The machine of claim 12 wherein the debris clearing system (73) comprises an automatic vacuum for removing dust and debris created by a machining process.

14. The machine of claim 11, 12, or 13 wherein the rotatable spindle (50) is capable of moving its axis between a first position to a second position.

15. The machine of claim 11, 12, 13 or 14 wherein the control system (56) is capable of receiving maximum and minimum finish depths of cut values, and calculating the position of the cutting tool (68) to remove a desired amount of material from the workpiece (42).

## Patentansprüche

1. Verfahren zum Entfernen von Material von einem Werkstück (42), wobei das Verfahren folgende Schritte aufweist:
Befestigen des Werkstücks (42) an einer rotationsbeweglichen Spindel (50) mit Verriegelungsmechanismen, die an einer Bearbeitungsstation (47) angebracht sind;
Aufzeichnen eines Bildes des Werkstücks (42) mit einer Bildaufnahmevorrichtung (51), die an der Bearbeitungsstation (47) angebracht ist;
Vergleichen des aufgezeichneten Bildes mit einer Datenbank, um das geeignete Programm für das Werkstück (42) auszuwählen; und
Initiieren eines Materialentfernungsprozesses an dem Werkstück (42) mittels eines Schneidwerkzeugs (68), das an einem ersten positionierbaren Arm (72) befestigt ist, der an der Bearbeitungsstation (47) angebracht ist;
**gekennzeichnet durch**
Überprüfen der Oberfläche des Werkstücks (42), an der Material entfernt worden ist, unter Verwendung einer Prüfsonde (54), die an einem zweiten positionierbaren Arm (84) befestigt ist, der an der Bearbeitungsstation (47) angebracht ist, und mit einem Steuersystem (56), das zum automatischen Positionieren des ersten und des zweiten Arms (72, 84) in der Lage ist.

2. Verfahren nach Anspruch 1, das weiterhin aufweist:
Berechnen einer abschließenden Materialentfernungsprozess-Spezifikation auf der Basis der Überprüfung; und
Entfernen von zusätzlichen Material von dem Werkstück (42) auf der Basis der Berechnung.

3. Verfahren nach Anspruch 2, das weiterhin aufweist:
Ausführen einer abschließenden Überprüfung zur Sicherstellung, dass das Teil berechnete Spezifikationen erfüllt.

4. Verfahren nach Anspruch 1, 2 oder 3,
wobei das Werkstück (42) einen nicht konzentrischen Querschnitt aufweist.

5. Verfahren nach Anspruch 4, das weiterhin aufweist:
Bewegen der rotationsbeweglichen Spindel (50) außermittig, um dem nicht konzentrischen Werkstück (42) Rechnung zu tragen.

6. Verfahren nach Anspruch 5, das weiterhin aufweist:
Bewegen der rotationsbeweglichen Spindel (50) zurück zu dem Zentrum nach dem Materialentfernungsprozess; und
Verifizieren der Spindelposition nach dem Bewegen der rotationsbeweglichen Spindel (50) zurück zu dem Zentrum.

7. Verfahren nach einem der vorausgehenden Ansprüche, aufweisend:
Positionieren eines Schneidwerkzeugs (68) in Bezug auf die rotationsbewegliche Spindel (50) nach Maßgabe des ausgewählten Programms.

8. Verfahren nach einem der vorausgehenden Ansprüche, das ferner aufweist:
Reinigen des Bereichs, in dem Material entfernt wird, mittels eines Fragment-Reinigungssystems (73).

9. Verfahren nach einem der vorausgehenden Ansprüche, das ferner aufweist:
Bereitstellen einer Liste von Programmen, die für das Werkstück (42) zur Verfügung stehen, auf einer Anzeige, die einer Bedienungsperson zur Verfügung steht, und Ermöglichen, dass die Bedienungsperson ein gewünschtes Programm aus der Programmliste auswählt.

10. Verfahren zum spanenden Bearbeiten eines Turbobläser-Triebwerksgehäuses, das die Schritte nach einem der vorausgehenden Ansprüche aufweist, wobei der Materialentfernungsprozess Material von einem abtragbaren Reibstreifen (46) des Triebwerksgehäuses entfernt.

11. Maschine zum Entfernen von Material von einem Werkstück (42), wobei die Maschine Folgendes aufweist:
eine rotationsbewegliche Spindel (50) mit Verriegelungsmechanismen zum Befestigen des Werkstücks (42);
eine Bildaufnahmevorrichtung (51) zum Aufnehmen eines Bildes des an der Spindel befestigten Werkstücks (42); und
ein Schneidwerkzeug (68), das an einem ersten positionierbaren Arm (72) befestigt ist, wobei das Schneidwerkzeug (68) in der Lage ist, Material von einem Werkstück (42) zu entfernen, das auf der rotationsbeweglichen Spindel (50) rotationsmäßig bewegt wird;
**gekennzeichnet durch**:
eine Prüfsonde (54), die an einem zweiten positionierbaren Arm (84) befestigt ist, wobei die Prüfsonde (54) in der Lage ist, Messungen an Oberflächen des Werkstücks (42) vorzunehmen;
ein Steuersystem (56) mit einer Benutzer-Schnittstelle (88), wobei das Steuersystem in der Lage ist, den ersten und den zweiten positionierbaren Arm (72, 84) automatisch zu positionieren und Eingaben von der Benutzer-Schnittstelle zu empfangen;
wobei das Steuersystem dazu ausgebildet ist, ein Bild von der Bildaufnahmevorrichtung (51) zu empfangen, das Bild mit einer Datenbank von vorab geladenen Bildern von potentiellen Werkstücken zu vergleichen, die geeigneten Programme auf der Basis eines Vergleichs des Bildes mit den vorab geladenen Bildern auszuwählen und die Liste von geeigneten Programmen an der Benutzer-Schnittstelle anzuzeigen.

12. Maschine nach Anspruch 11, weiterhin aufweisend:
ein Fragment-Reinigungssystem (73) benachbart dem Schneidwerkzeug (68).

13. Maschine nach Anspruch 12,
wobei das Fragment-Reinigungssystem (73) ein automatisches Vakuum zum Entfernen von Staub und Fragmenten aufweist, die durch einen spanenden Bearbeitungsprozess erzeugt werden.

14. Maschine nach Anspruch 11, 12 oder 13,
wobei die rotationsbewegliche Spindel (50) in der Lage ist, ihre Achse zwischen einer ersten Position und einer zweite Position zu bewegen.

15. Maschine nach Anspruch 11, 12, 13 oder 14,
wobei das Steuersystem (56) in der Lage ist, maximale und minimale Fertigbearbeitungstiefen von Schneidwerten zu empfangen und die Position des Schneidwerkzeugs (68) zu berechnen, um eine gewünschte Materialmenge von dem Werkstück (42) zu entfernen.

## Revendications

1. Procédé de retrait de matériau d'une pièce de fabrication (42), le procédé comprenant :
la fixation de la pièce de fabrication (42) à une broche rotative (50) avec des mécanismes de verrouillage montés sur un poste d'usinage (47) ;
l'enregistrement d'une image de la pièce de fabrication (42) avec un dispositif de capture d'image (51) monté sur le poste d'usinage (47) ;
la comparaison de l'image enregistrée avec une base de données pour choisir le programme approprié pour la pièce de fabrication (42) ; et
l'initiation d'un processus de retrait de matériau sur la pièce de fabrication (42) avec un outil de découpe (68) attaché à un premier bras positionnable (72) monté sur le poste d'usinage (47) ;
**caractérisé par**
l'inspection de la surface de la pièce de fabrication (42) où le matériau a été retiré à l'aide d'une sonde d'inspection (54), attachée à un second bras positionnable (84) monté sur le poste d'usinage (47), avec un système de commande (56) capable de positionner automatiquement les premier et second bras (72, 84).

2. Procédé selon la revendication 1, comprenant en outre :
le calcul d'une spécification de processus de retrait de matériau final d'après l'inspection ; et
le retrait de matériau supplémentaire de la pièce de fabrication (42) d'après le calcul.

3. Procédé selon la revendication 2, comprenant en outre :
la réalisation d'une inspection finale pour s'assurer que la pièce satisfait les spécifications calculées.

4. Procédé selon la revendication 1, 2 ou 3, dans lequel la pièce de fabrication (42) a une aire de coupe non concentrique.

5. Procédé selon la revendication 4, comprenant en outre :
le décentrage de la broche rotative (50) pour loger la pièce de fabrication (42) non concentrique.

6. Procédé selon la revendication 5, comprenant en outre :
le recentrage de la broche rotative (50) après le processus de retrait de matériau ; et
la vérification de l'emplacement de la broche après le recentrage de la broche rotative (50).

7. Procédé selon l'une quelconque des revendications précédentes, comprenant :
le positionnement d'un outil de découpe (68) par rapport à la broche rotative (50) en réponse au programme choisi.

8. Procédé selon l'une quelconque des revendications précédentes, comprenant en outre :
le déblayage de la zone de retrait de matériau avec un système de déblayage de débris (73).

9. Procédé selon l'une quelconque des revendications précédentes, comprenant en outre :
la fourniture d'une liste de programmes disponibles pour la pièce de fabrication (42) à un affichage disponible pour un opérateur, et
l'autorisation pour l'opérateur de choisir un programme souhaité parmi la liste de programmes.

10. Procédé d'usinage d'un carter de turboréacteur à double flux (42) comprenant les étapes selon l'une quelconque des revendications précédentes, dans lequel le processus de retrait de matériau retire du matériau d'une bande de friction abradable (46) du carter de turboréacteur.

11. Machine de retrait de matériau d'une pièce de fabrication (42), la machine comprenant :
une broche rotative (50) avec des mécanismes de verrouillage permettant de fixer la pièce de fabrication (42) ;
un dispositif d'enregistrement d'image (51) permettant de prendre une image de la pièce de fabrication (42) fixée à la broche ; et
un outil de découpe (68) attaché à un premier bras positionnable (72), l'outil de découpe (68) étant capable de retirer du matériau d'une pièce de fabrication (42) qui est tournée sur la broche rotative (50) ;
**caractérisée par**
une sonde d'inspection (54) attachée à un second bras positionnable (84), la sonde d'inspection (54) étant capable d'effectuer des lectures de surfaces de la pièce de fabrication (42) ;
un système de commande (56) avec une interface d'utilisateur (88), le système de commande étant capable de positionner automatiquement les premier et second bras positionnables (72, 84), et de recevoir des entrées en provenance de l'interface d'utilisateur ;
dans laquelle le système de commande est adapté pour recevoir une image en provenance du dispositif d'enregistrement d'image (51) pour comparer une image à une base de données d'images préchargées de pièces de fabrication potentielles, pour choisir les programmes appropriés d'après une comparaison de l'image aux images préchargées, et pour afficher la liste de programmes appropriés sur l'interface d'utilisateur.

12. Machine selon la revendication 11, comprenant en outre :
un système de déblayage de débris (73) adjacent à l'outil de découpe (68).

13. Machine selon la revendication 12, dans laquelle le système de déblayage de débris (73) comprend un vide automatique permettant de supprimer la poussière et les débris créés par un processus d'usinage.

14. Machine selon la revendication 11, 12 ou 13, dans laquelle la broche rotative (50) est capable de déplacer son axe entre une première position et une seconde position.

15. Machine selon la revendication 11, 12, 13 ou 14, dans laquelle le système de commande (56) est capable de recevoir des profondeurs définitives maximale et minimale de valeurs de coupe, et de calculer la position de l'outil de découpe (68) pour retirer une quantité souhaitée de matériau de la pièce de fabrication (42).
